(19) **Europäisches Patentamt / European Patent Office / Office européen des brevets**

(11) **EP 4 277 115 A1**

(12) # EUROPEAN PATENT APPLICATION
published in accordance with Art. 153(4) EPC

(43) Date of publication:
**15.11.2023 Bulletin 2023/46**

(21) Application number: **21926813.3**

(22) Date of filing: **23.12.2021**

(51) International Patent Classification (IPC):
**H02P 21/05** $^{(2006.01)}$     **H02P 27/06** $^{(2006.01)}$

(52) Cooperative Patent Classification (CPC):
**H02P 21/05; H02P 21/22; H02P 25/024; H02P 27/06**

(86) International application number:
**PCT/JP2021/047999**

(87) International publication number:
**WO 2022/176390 (25.08.2022 Gazette 2022/34)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **17.02.2021 JP 2021023546**

(71) Applicant: **MITSUBISHI HEAVY INDUSTRIES THERMAL SYSTEMS, LTD.**
**Tokyo 100-8332 (JP)**

(72) Inventors:
• **YAMADA, Ryohei**
  **Tokyo 100-8332 (JP)**
• **FUNAYAMA, Chikako**
  **Tokyo 100-8332 (JP)**
• **AIBA, Kenichi**
  **Tokyo 100-8332 (JP)**
• **SHIMIZU, Kenji**
  **Tokyo 100-8332 (JP)**
• **TAKAHASHI, Akiko**
  **Tokyo 100-8332 (JP)**

(74) Representative: **Cabinet Beau de Loménie**
**158, rue de l'Université**
**75340 Paris Cedex 07 (FR)**

(54) **CONTROL DEVICE, DRIVE DEVICE FOR MOTOR, CONTROL METHOD, AND PROGRAM**

(57)     A control device for a permanent magnet synchronous motor, the control device comprising: a means for setting voltage commands on two axes of a rotational orthogonal coordinate system; a means for coordinate-converting the voltage commands of the two axes into a three-phase voltage command; a means for applying the three-phase voltage command to a motor through power conversion by an inverter; a means for feeding back a terminal current of the motor; a means for determining a power-factor angle from the feedback current; and a means for adding or subtracting the power-factor angle to/from a phase used when the terminal current of the motor obtained in three phases is converted into orthogonal coordinates, wherein the control device further comprises: a holding unit for holding a relationship between the fluctuation of a DC voltage supplied to the inverter and a correction value of the phase; and a means for adding the correction value to at least one of a phase used in three-phase/two-phase conversion for converting three phases into two phases and a phase used in two-phase/three-phase conversion for converting two phases into three phases.

FIG. 2

**Description**

Technical Field

The present disclosure relates to a control device, a drive device for a motor, a control method, and a program.
This application claims the priority of Japanese Patent Application No. 2021-023546 filed in Japan on February 17, 2021, the content of which is incorporated herein by reference.

Background Art

In some cases, a DC voltage generated by a converter may be supplied to an inverter, and the inverter is controlled to drive a motor. In general, a voltage output from the converter is smoothed by a large-capacity capacitor.

Citation List

Patent Literature

[PTL 1] Japanese Patent No. 4764124

Summary of Invention

Technical Problem

Incidentally, when capacitance of the capacitor for smoothing an output voltage of the converter is small, a device for driving the motor can decrease in size. However, when the capacitance of the capacitor is small, the output voltage of the converter is more likely to fluctuate than when the capacitance of the capacitor is larger. As a result, in a region of a high-speed range where a motor voltage required for driving the motor is equal to or higher than a DC voltage, the motor voltage is affected by a fluctuation in the DC voltage, and a rotation speed fluctuation or a torque fluctuation in the motor increases, thereby causing a possibility that the motor may not be stably driven. In addition, a fluctuation in a motor current also increases, thereby causing a possibility that an operating range may decrease.
Therefore, there is a demand for a technique capable of suppressing the torque fluctuation, the rotation speed fluctuation, and an operating range decrease in a high-speed range of the motor even when a fluctuating voltage is input to the inverter.
The present disclosure is made to solve the above-described problems, and an object of the present disclosure is to provide a control device, a drive device for a motor, a control method, and a program which can suppress a torque fluctuation, a rotation speed fluctuation, and an operating range decrease in a high-speed range of a motor even when a fluctuating voltage is input to an inverter.

Solution to Problem

According to the present disclosure, in order to solve the above-described problems, there is provided a control device for a permanent magnet synchronous motor having means for setting a voltage command on two axes of a rotational orthogonal coordinate system, means for coordinate-converting the voltage command of the two axes into three phases, means for applying the voltage command of the three phases to a motor through power conversion by an inverter, means for feeding back a terminal current of the motor, power-factor angle determination means for determining a power-factor angle from the feedback current, and power-factor angle adjustment means for adding or subtracting the power-factor angle to or from a phase used when the terminal current of the motor obtained in the three phases is converted into orthogonal coordinates. The control device includes a holding unit that holds a relationship between a fluctuation in a DC voltage supplied to the inverter and a correction value of a phase, and correction value addition means for adding the correction value to at least one of a phase used when three-phase/two-phase conversion is performed to convert the three phases into two phases and a phase used when two-phase/three-phase conversion is performed to convert the two phases into the three phases.
The drive device for a motor according to the present disclosure includes the control device and the inverter.
According to the present disclosure, there is provided a control method of using a control device for a permanent magnet synchronous motor having means for setting a voltage command on two axes of a rotational orthogonal coordinate system, means for coordinate-converting the voltage command of the two axes into three phases, means for applying the voltage command of the three phases to a motor through power conversion by an inverter, means for feeding back a terminal current of the motor, power-factor angle determination means for determining a power-factor angle from the feedback current, and power-factor angle adjustment means for adding or subtracting the power-factor angle to or from a phase used when the terminal current of the motor obtained in the three phases is converted into orthogonal coordinates. The control method includes holding a relationship between a fluctuation in a DC voltage supplied to the inverter and a correction value of a phase, and adding the correction value to at least one of a phase used when three-phase/two-phase conversion is performed to convert the three phases into two phases and a phase used when two-phase/three-phase conversion is performed to convert the two phases into the three phases.

According to the present disclosure, there is provided a program causing a computer of a control device to execute a process for a permanent magnet synchronous motor having means for setting a voltage command on two axes of a rotational orthogonal coordinate system, means for coordinate-converting the voltage command of the two axes into three phases, means for applying the voltage command of the three phases to a motor through power conversion by an inverter, means for feeding back a terminal current of the motor, power-factor angle determination means for determining a power-factor angle from the feedback current, and power-factor angle adjustment means for adding or subtracting the power-factor angle to or from a phase used when the terminal current of the motor obtained in the three phases is converted into orthogonal coordinates. The process includes holding a relationship between a fluctuation in a DC voltage supplied to the inverter and a correction value of a phase, and adding the correction value to at least one of a phase used when three-phase/two-phase conversion is performed to convert the three phases into two phases and a phase used when two-phase/three-phase conversion is performed to convert the two phases into the three phases.

Advantageous Effects of Invention

According to the control device, the drive device for a motor, the control method, and the program in the present disclosure, it is possible to suppress a torque fluctuation, a rotation speed fluctuation, and an operating range decrease in a high-speed range of a motor even when a fluctuating voltage is input to an inverter.

Brief Description of Drawings

Fig. 1 is a view illustrating an example of a configuration of a drive device for a motor according to an embodiment of the present disclosure.
Fig. 2 is a view illustrating an example of a configuration of a control device according to the embodiment of the present disclosure.
Fig. 3 is a view illustrating an example of a first phase correction function according to the embodiment of the present disclosure.
Fig. 4 is a view illustrating an example of a second phase correction function according to the embodiment of the present disclosure.
Fig. 5 is a first view illustrating an example of a process flow of the control device according to the embodiment of the present disclosure.
Fig. 6 is a second view illustrating an example of a process flow of the control device according to the embodiment of the present disclosure.
Fig. 7 is a schematic block diagram illustrating a configuration of a computer according to at least one embodiment.

Description of Embodiments

<Embodiment>

Hereinafter, embodiments will be described in detail with reference to the drawings.
A drive device for a motor according to an embodiment of the present disclosure will be described.

(Configuration of Drive Device for Motor)

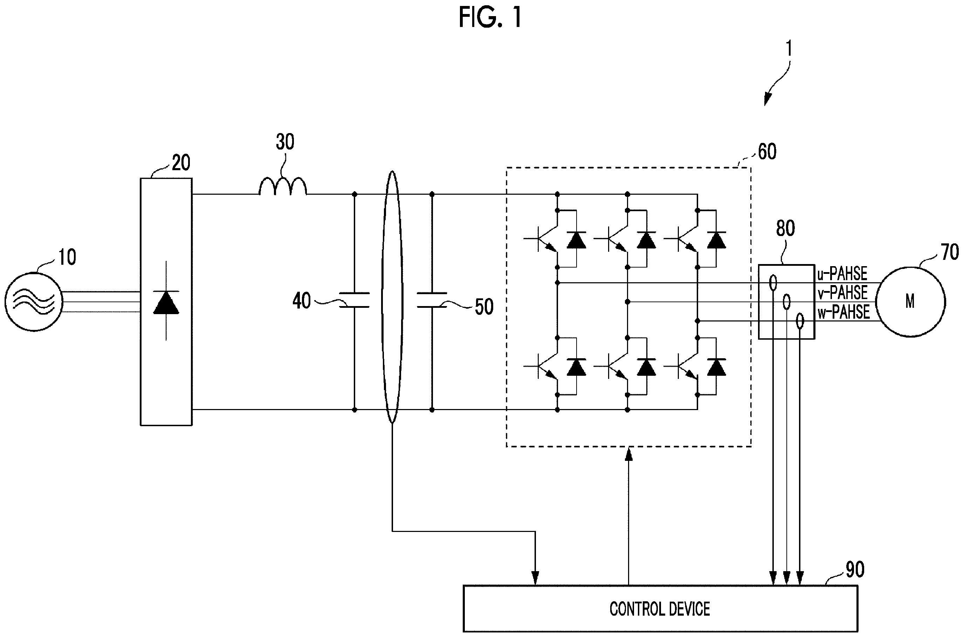

Fig. 1 is a view illustrating a configuration of a drive device for a motor 1 according to an embodiment of the present disclosure. As illustrated in Fig. 1, the drive device for a motor 1 includes a power supply 10, a converter 20, a reactor 30, a first capacitor 40, a second capacitor 50, an inverter 60, a motor 70, a current sensor 80, and a control device 90.
The drive device for a motor 1 is a device which can suppress pulsation of a torque or a rotation speed of the motor 70 and can suppress an operating range decrease caused by suppressing the pulsation of a motor current by controlling the inverter 60 in accordance with a voltage fluctuation even when the voltage fluctuation in an output voltage of the converter 20 is large in a high-speed range of the motor 70.
The power supply 10 is a power supply that outputs a three-phase alternating voltage. The three-phase alternating voltage output by the power supply 10 is input to the converter 20.

The converter 20 converts the three-phase alternating voltage into a DC voltage. For example, the converter 20 is a diode rectification circuit. However, the converter 20 is not limited to the diode rectification circuit, and may be another rectification circuit using a switching element.

The reactor 30 and the first capacitor 40 form an LC filter. The LC filter removes a voltage fluctuation in a frequency component determined by a resonance frequency due to an inductance of the reactor 30 and a capacitance of the first capacitor 40, in a voltage fluctuation in the voltage output by the converter 20. For example, the first capacitor 40 is a film capacitor. The film capacitor generally has a smaller capacity than an electrolytic capacitor, but is small in size, lightweight, and has a long life. When the first capacitor 40 is the film capacitor having a small capacity, the voltage fluctuation in an input of the inverter 60 increases, compared to that when the first capacitor 40 is an electrolytic capacitor having a large size and a large capacity.

The second capacitor 50 is a snubber capacitor. The snubber capacitor suppresses the voltage fluctuation caused by switching noise occurring when the inverter 60 converts a DC voltage into an AC voltage by using a switching element.

The inverter 60 generates the AC voltage for driving the motor 70 from the DC voltage supplied from the converter 20 via the LC filter described above, based on control of the control device 90.

The inverter 60 includes switching elements SW1, SW2, SW3, SW4, SW5, and SW6. For example, the switching elements SW1 to SW6 are semiconductor elements having control terminals (gate terminals in a case of IGBT or MOSFET) such as an insulated gate bipolar transistor (IGBT) and a metal-oxide-semiconductor field effect transistor (MOSFET) .

The motor 70 rotates in accordance with the AC voltage supplied to the inverter 60. For example, the motor 70 is a compressor motor used in an air conditioner.

The current sensor 80 detects motor currents iu, iv, and iw. iu is a motor current corresponding to a u-phase in the inverter 60. iv is a motor current corresponding to a v-phase in the inverter 60. iw is a motor current corresponding to a w-phase in the inverter 60.

(Configuration of Control Device)

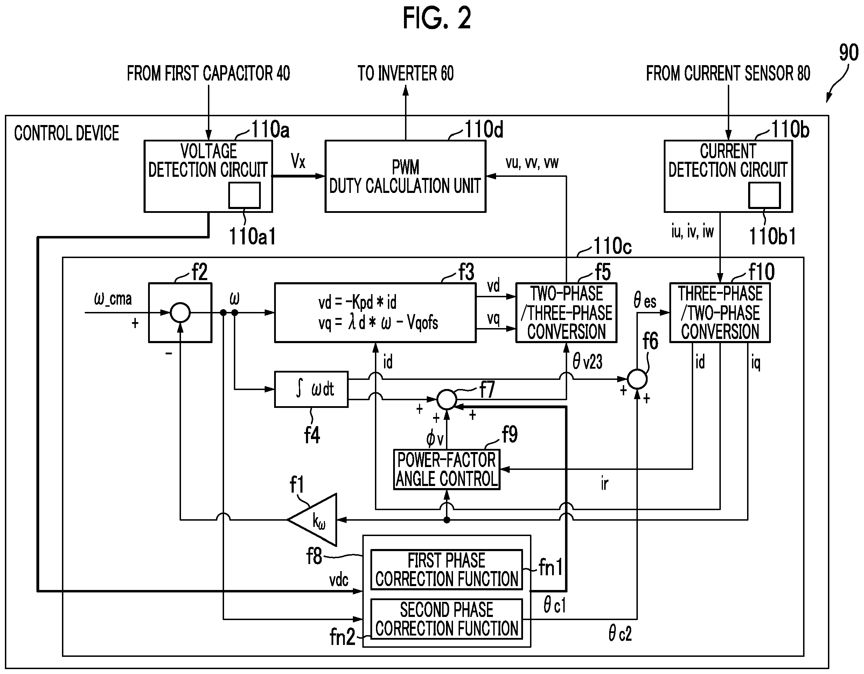

The control device 90 generates a control signal for controlling the inverter 60. As illustrated in Fig. 2, the control device 90 includes a voltage detection circuit 110a, a current detection circuit 110b, a voltage command generation unit 110c, and a pulse width modulation (PWM) duty calculation unit 110d (an example of a calculation unit). Examples of a specific motor control method of the control device 90 include variable frequency (V/F) control.

The voltage detection circuit 110a specifies an inter-terminal voltage Vx of the first capacitor 40. For example, the voltage detection circuit 110a includes an analog to digital (A/D) converter 110a1. The A/D converter 110a1 receives the inter-terminal voltage Vx of the first capacitor 40. The A/D converter 110a1 converts the voltage Vx into a digital value corresponding to the received voltage Vx on a one-to-one basis (that is, a digital value indicating a value of the received voltage).

The current detection circuit 110b specifies each value of the motor currents iu, iv, and iw detected by the current sensor 80.

(Configuration of Voltage Command Generation Unit)

In Fig. 2, co_cmd is a speed command (electric angle). $\omega$ is an output frequency of the inverter 60. vd is a d-axis voltage command. vq is a q-axis voltage command. vu is a u-phase voltage command. vv is a v-phase voltage command. vw is a w-phase voltage command. id is a d-axis inverter output current. iq is a q-axis inverter output current. Vx is a voltage between both terminals of the first capacitor 40 which is detected by the voltage detection circuit 110a. $\theta c1$ is a phase correction amount when the voltage command vu, the voltage command vv, and the voltage command vw are generated from the d-axis voltage command vd and the q-axis voltage command vq.

As illustrated in Fig. 2, the voltage command generation unit 110c includes a first functional unit f1, a second functional unit f2, a third functional unit f3, a fourth functional unit f4, a fifth functional unit f5, a sixth functional unit f6, a seventh functional unit f7, an eighth functional unit f8, a ninth functional unit f9, and a tenth functional unit f10.

The first functional unit f1 receives the inverter output current iq from the tenth functional unit f10. The first functional unit f1 multiplies the inverter output current iq by a proportionality constant $k_\omega$. The inverter output current iq is a current that contributes to torque generation of the motor 70. ($k_\omega \cdot$Iq which is a result of multiplying the proportional constant $k_\omega$ and the inverter output current iq is as described in PTL 1, and is used for preventing maladjustment by feeding back the torque fluctuation to the rotation speed)

The second functional unit f2 receives an output of the first functional unit f1. In addition, the second functional unit f2 receives a speed command $\omega$_cmd. The second functional unit f2 subtracts the output of the first functional unit f1 from the speed command ω_cmd. The second functional unit f2 outputs a subtraction result as an output frequency ω of the inverter 60, and outputs the subtraction result to the third functional unit f3, the fourth functional unit f4, and the eighth functional unit f8.

The third functional unit f3 receives the output frequency ω of the inverter 60 from the second functional unit f2. In addition, the third functional unit f3 receives an inverter output current id from the tenth functional unit f10. The third functional unit f3 generates a d-axis voltage command vd by substituting the inverter output current id into Equation (1) indicated below. The third functional unit f3 outputs the generated d-axis voltage command vd to the fifth functional unit f5.

[Equation 1]

$$vd = -Kpd*id \qquad \ldots \ (1)$$

Here, Kpd is a proportionality constant.

In addition, the third functional unit f3 generates a q-axis voltage command vq by substituting the output frequency ω of the inverter 60 into Equation (2) indicated below. The third functional unit f3 outputs the generated q-axis voltage command vq to the fifth functional unit f5.

[Equation 2]

$$vq = \lambda d*\omega - Vqofs \qquad \ldots \ (2)$$

Here, λd is an induced voltage coefficient. In addition, Vqofs is a q-axis voltage offset value. The q-axis voltage offset value Vqofs can be expressed by using the proportional constant K as in Equation (3) indicated below.

[Equation 3]

$$Vqofs = K \int id \ dt \qquad \ldots \ (3)$$

The inverter output current id is controlled to be zero by Equation (1) and Equation (2) above. When the d-axis inverter output current id becomes zero, the d-axis inverter output voltage also becomes zero.

The fourth functional unit f4 receives the output frequency ω of the inverter 60 from the second functional unit f2. The fourth functional unit d4 integrates the output frequency ω of the inverter 60 in a time axis direction. The fourth functional unit f4 outputs an integration result to the sixth functional unit f6 and the seventh functional unit f7.

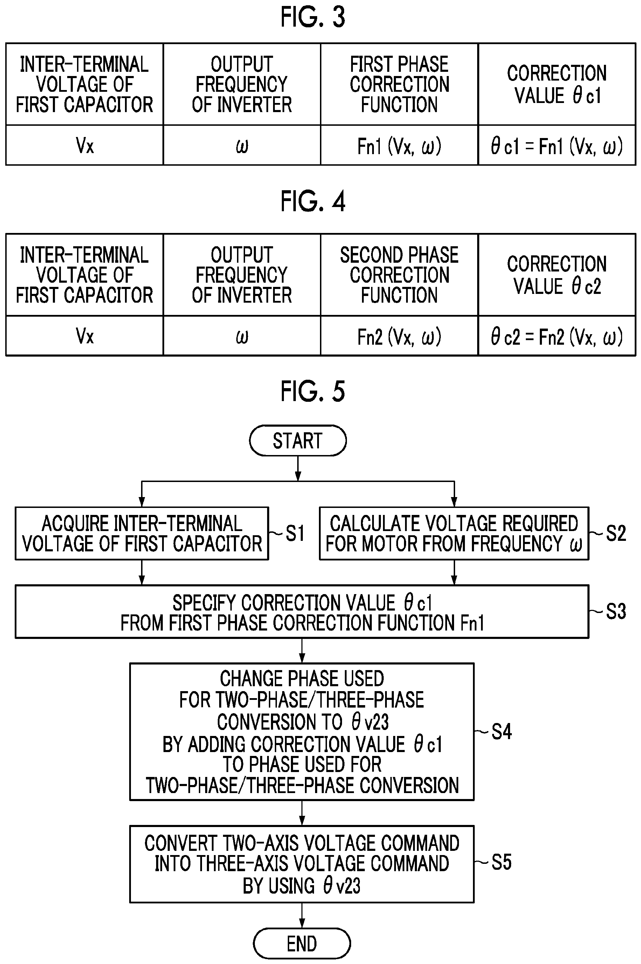

The eighth functional unit f8 receives a digital value indicating the inter-terminal voltage Vx of the first capacitor 40 from the voltage detection circuit 110a. In addition, the eighth functional unit f8 receives the output frequency ω of the inverter 60 from the second functional unit f2. The eighth functional unit f8 determines a correction value θc1, based on the received digital value, the received output frequency ω, and a first phase correction function Fn1 (an example of a relationship between a fluctuation in the DC voltage supplied to the inverter and a correction value of a phase). In addition, the eighth functional unit f8 determines a correction value θc2, based on the received digital value, the received output frequency ω, and a second phase correction function Fn2 (an example of the relationship between the fluctuation in the DC voltage supplied to the inverter and the correction value of the phase). The correction value θc1 is a correction value for correcting a phase used when the fifth functional unit f5 performs two-phase/three-phase conversion. The correction value θc2 is a correction value for correcting a phase used when the tenth functional unit f10 performs three-phase/two-phase conversion. The correction values θc1 and θc2 are controlled to change a magnitude of the phase in accordance with a fluctuation amount of the inter-terminal voltage Vx of the first capacitor 40. Fig. 3 is a view illustrating an example of the first phase correction function Fn1 according to the embodiment. Fig. 4 is a view illustrating an example of the second phase correction function Fn2 according to the embodiment. The first phase correction function Fn1 is a function determined by performing simulations and experiments in advance, and is a function which can specify the correction value θc1 by an inter-terminal DC voltage of the first capacitor 40 and a voltage required for driving the motor 70. In addition, the second phase correction function Fn2 is a function determined by performing simulations and experiments in advance, and is a function which can specify the correction value θc2 by the inter-terminal DC voltage of the first capacitor 40 and the voltage required for driving the motor 70. The correction value θc1 is added to a phase on which the seventh functional unit f7 performs two-phase/three-phase conversion. In addition, the correction value θc2 is added to a phase on which the sixth functional unit f6 performs three-phase/two-phase conversion.

Specifically, the first phase correction function Fn1 is a function of the inter-terminal voltage Vx of the first capacitor and the voltage required for the motor 70, and is a function for determining a correction value. The voltage required for the motor 70 is obtained by multiplying the output frequency ω of the inverter 60 by an induced voltage coefficient λd. That is, the first phase correction function Fn1 is a function of the inter-terminal voltage Vx of the first capacitor and the output frequency ω of the inverter 60, and includes the induced voltage coefficient λd. Then, each correction value θc1 is specified by substituting the inter-terminal voltage Vx of the first capacitor and the output frequency ω of the inverter 60 into the first phase correction function Fn1. That is, the eighth functional unit f8 specifies a value of the first phase correction function Fn1 (that is, the correction value θc1) by substituting the voltage Vx and the output frequency ω into the first phase correction function Fn1. The correction value θc1 specified by the eighth functional unit f8 in this way becomes the correction value used by the seventh functional unit f7.

In addition, specifically, the second phase correction function Fn2 is a function of the inter-terminal voltage Vx of the first capacitor and the voltage required for the motor 70, and is a function for determining the correction value. The voltage required for the motor 70 is obtained by multiplying the output frequency ω of the inverter 60 by an induced voltage coefficient λd. That is, the second phase correction function Fn2 is a function of the inter-terminal voltage Vx of the first capacitor and the output frequency ω of the inverter 60, and includes the induced voltage coefficient λd. Then, each correction value θc2 is specified by substituting the inter-terminal voltage Vx of the first capacitor and the output frequency ω of the inverter 60 into the second phase correction function Fn2. That is, the eighth functional unit f8 specifies a value of the second phase correction function Fn2 (that is, the correction value θc2) by substituting the voltage Vx and the output frequency ω into the second phase correction function Fn2. The correction value θc2 specified by the eighth functional unit f8 in this way becomes the correction value used by the sixth functional unit f6.

When the voltage required for the motor 70 is calculated in more detail, for example, the eighth functional unit f8 may add a product obtained by multiplying an imaginary number j, the output frequency ω, the q-axis to a product obtained by multiplying the output frequency ω by the induced voltage coefficient Ad. That is, the eighth functional unit f8 may calculate the voltage required for the motor 70 by calculating a vector represented by a complex number (for example, by using a phasor method). In this case, the eighth functional unit f8 may store the q-axis inductance in advance, and may acquire and use the inverter output current iq output by the tenth functional unit f10 as the q-axis current. As a result, the first phase correction function Fn1 and the second phase correction function Fn2 may be the same function, or may be different functions.

Specifying the correction value θc1 and the correction value θc2 is not limited to specifying the values by using functions such as the first phase correction function Fn1 or the second phase correction function Fn2 described above. For example, the inter-terminal voltage Vx of the first capacitor, the voltage required for the motor 70, and the correction value corresponding thereto may be associated with each other. For example, all of these may be stored as a data table (an example of a relationship between the fluctuation in the DC voltage supplied to the inverter and the correction value of the phase) of the phase). The eighth functional unit f8 may specify the inter-terminal voltage Vx of the first capacitor and the voltage required for the motor 70, and may specify the correction value stored in association with the specified inter-terminal voltage Vx of the first capacitor and the specified voltage required for the motor 70, in the data table, as a desired correction value.

The sixth functional unit f6 receives an integration result from the fourth functional unit f4. In addition, the sixth functional unit f6 receives the correction value θc2 from the eighth functional unit f8. The sixth functional unit f6 adds the correction value θc2 to the integration result. That is, the sixth functional unit f6 corrects the integration result of the output frequency co of the inverter 60 by using the correction value θc2. The sixth functional unit f6 outputs an addition result θes to the tenth functional unit f10.

The tenth functional unit f10 receives the addition result θes from the sixth functional unit f6. In addition, the tenth functional unit f10 receives each of the motor currents iu, iv, and iw of the u-phase, the v-phase, and the w-phase from the current detection circuit 110b at a predetermined time interval. The tenth functional unit f10 sets the addition result θes as the phase, and performs three-phase/two-phase conversion on the motor current iu, the motor current iv, and the motor current iw into the inverter output current id and the inverter output current iq by using Equation (4) below, for example. The tenth functional unit f10 outputs the inverter output current id to the third functional unit f3. In addition, the tenth functional unit f10 outputs the inverter output current iq to the first functional unit f1 and the ninth functional unit f9.
[Equation 4]

$$\begin{bmatrix} i_d \\ i_q \end{bmatrix} = \sqrt{\frac{2}{3}} \begin{bmatrix} cos(\theta_{es}) & cos\left(\theta_{es} - \frac{2\pi}{3}\right) & cos\left(\theta_{es} + \frac{2\pi}{3}\right) \\ -sin(\theta_{es}) & -sin\left(\theta_{es} - \frac{2\pi}{3}\right) & -sin\left(\theta_{es} + \frac{2\pi}{3}\right) \end{bmatrix} \begin{bmatrix} i_u \\ i_v \\ i_w \end{bmatrix}$$

$$\dots \ (4)$$

The ninth functional unit f9 specifies a power-factor angle φv by using the inverter output current iq. For example, the power-factor angle φv may be specified in the same manner as the method disclosed in PTL 1. The ninth functional unit f9 outputs the specified power-factor angle φv to the seventh functional unit f7.

The seventh functional unit f7 receives the integration result from the fourth functional unit f4. In addition, the seventh functional unit f7 receives the correction value θc1 from the eighth functional unit f8. In addition, the seventh functional unit f7 receives the power-factor angle φv from the ninth functional unit f9. The seventh functional unit f7 adds the integration result, the correction value θc1, and the power-factor angle φv. The seventh functional unit f7 outputs an addition result θv23 to the fifth functional unit f5.

The fifth functional unit f5 receives the d-axis voltage command vd and the q-axis voltage command vq from the third functional unit f3. In addition, the fifth functional unit f5 receives the addition result θv23 from the seventh functional unit f7. The fifth functional unit f5 converts the d-axis voltage command vd and the q-axis voltage command vq into the u-phase voltage command vu, the v-phase voltage command vv, and the w-phase voltage command vw by using Equation (5) below, for example.

[Equation 5]

$$\begin{bmatrix} v_u \\ v_v \\ v_w \end{bmatrix} = \sqrt{\frac{2}{3}} \begin{bmatrix} cos(\theta_{v23}) & -sin(\theta_{v23}) \\ cos\left(\theta_{v23} - \frac{2\pi}{3}\right) & -sin\left(\theta_{v23} - \frac{2\pi}{3}\right) \\ cos\left(\theta_{v23} + \frac{2\pi}{3}\right) & -sin\left(\theta_{v23} + \frac{2\pi}{3}\right) \end{bmatrix} \begin{bmatrix} v_d \\ v_q \end{bmatrix}) \quad \dots \ (5)$$

The PWM duty calculation unit 110d generates a PWM signal for controlling the inverter 60 in which a duty ratio is determined based on the inter-terminal DC voltage of the first capacitor 40, the voltage command vu, the voltage command vv, and the voltage command vw.

For example, in the high-speed range of the motor 70, the PWM duty calculation unit 110d uses a phase θv23 corrected by using the correction value θc1, and generates the PWM signal for controlling the inverter 60 in which the duty ratio is determined based on the u-phase voltage command vu, the v-phase voltage command vv, and the w-phase voltage command vw which are output by the fifth functional unit f5 performing two-phase/three-phase conversion, and the inter-terminal DC voltage of the first capacitor 40.

(Process Performed by Control Device)

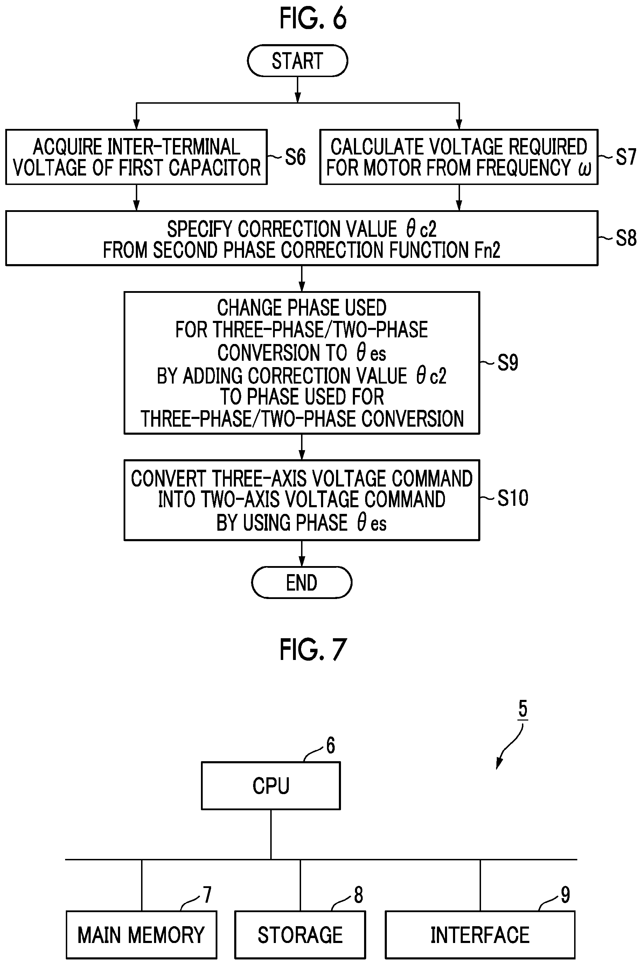

Next, processes of two-phase/three-phase conversion and the three-phase/two-phase conversion which are performed when the control device 90 generates the PWM signal for controlling the inverter 60 in the high-speed range of the motor 70 will be described with reference to Figs. 5 and 6. First, the process of two-phase/three-phase conversion performed by the control device 90 will be described.

The voltage detection circuit 110a specifies an inter-terminal voltage Vx of the first capacitor 40. The voltage detection circuit 110a outputs the specified voltage Vx to the eighth functional unit f8. The eighth functional unit f8 acquires the voltage Vx output by the voltage detection circuit 110a (Step S1).

In addition, the second functional unit f2 outputs the output frequency ω of the inverter 60 to the eighth functional unit f8. The eighth functional unit f8 acquires the output frequency ω output by the second functional unit f2. The eighth functional unit f8 calculates a voltage required for the motor 70, based on the acquired output frequency ω (Step S2). For example, the eighth functional unit f8 calculates the voltage required for the motor 70 by multiplying the output frequency ω by the induced voltage coefficient Ad.

The eighth functional unit f8 specifies the correction value θc1 from the first phase correction function Fn1. For example, the eighth functional unit f8 substitutes the acquired voltage Vx and the calculated voltage required for the motor 70 into the first phase correction function Fn1, and specifies a value of the first phase correction function Fn1, that is, the correction value θc1 (Step S3). The eighth functional unit f8 outputs the specified correction value θc1 to the seventh functional unit f7.

The seventh functional unit f7 acquires the correction value θc1 output by the eighth functional unit f8. In addition, the seventh functional unit f7 acquires an integration result output by the fourth functional unit f4. In addition, the seventh functional unit f7 acquires the power-factor angle φv output by the ninth functional unit f9. The seventh functional unit f7 calculates the addition result θv23 by adding the integration result, the power-factor angle φv, and the correction value θc1. That is, the seventh functional unit f7 changes a phase used for two-phase/three-phase conversion to θv23 by adding the correction value θc1 to a phase used for two-phase/three-phase conversion (Step S4). The seventh functional unit f7 outputs the phase θv23 to the fifth functional unit f5.

The fifth functional unit f5 acquires the phase θv23 output by the seventh functional unit f7. In addition, the fifth functional unit f5 acquires the d-axis voltage command vd and the q-axis voltage command vq which are output by the third functional unit f3. The fifth functional unit f5 converts a two-axis voltage command (that is, the d-axis voltage command vd and the q-axis voltage command vq) to a three-axis voltage command (that is, the voltage command vu, the voltage command vv, and the voltage command vw) by using the phase θv23 (Step S5). The fifth functional unit f5 outputs a three-axis voltage command to the PWM duty calculation unit 110d.

The PWM duty calculation unit 110d acquires the three-axis voltage command output by the fifth functional unit f5. In addition, the PWM duty calculation unit 110d acquires the DC voltage Vx output by the voltage detection circuit 110a. The PWM duty calculation unit 110d generates the PWM signal for controlling the inverter 60, based on the three-axis voltage command output by the fifth functional unit f5 and the DC voltage Vx output by the voltage detection circuit 110a. Then, the PWM duty calculation unit 110d outputs the generated PWM signal to the inverter 60.

Next, the process of three-phase/two-phase conversion performed by the control device 90 will be described.

The voltage detection circuit 110a specifies an inter-terminal voltage Vx of the first capacitor 40. The voltage detection circuit 110a outputs the specified voltage Vx to the eighth functional unit f8. The eighth functional unit f8 acquires the voltage Vx output by the voltage detection circuit 110a (Step S6).

In addition, the second functional unit f2 outputs the output frequency ω of the inverter 60 to the eighth functional unit f8. The eighth functional unit f8 acquires the output frequency ω output by the second functional unit f2. The eighth functional unit f8 calculates the voltage required for the motor 70, based on the acquired output frequency ω (Step S7). For example, the eighth functional unit f8 calculates the voltage required for the motor 70 by multiplying the output frequency ω by the induced voltage coefficient Ad.

The eighth functional unit f8 specifies the correction value θc2 from the second phase correction function Fn2. For example, the eighth functional unit f8 substitutes the acquired voltage Vx and the calculated voltage required for the motor 70 into the second phase correction function Fn2, and specifies a value of the second phase correction function Fn2, that is, the correction value θc2 (Step S8). The eighth functional unit f8 outputs the specified correction value θc2 to the sixth functional unit f6.

The sixth functional unit f6 acquires the correction value θc2 output by the eighth functional unit f8. In addition, the sixth functional unit f6 acquires an integration result output by the fourth functional unit f4. The sixth functional unit f6 adds the integration result and the correction value θc2, and calculates the addition result θes. That is, the sixth functional unit f6 changes a phase used for three-phase/two-phase conversion to θes by adding the correction value θc2 to a phase used for three-phase/two-phase conversion (Step S9). The sixth functional unit f6 outputs the phase θes to the tenth functional unit f10.

The tenth functional unit f10 acquires the phase θes output by the sixth functional unit f6. In addition, the tenth functional unit f10 acquires the motor current iu, the motor current iv, and the motor current iw which are output by the current detection circuit 110b. The tenth functional unit f10 converts the three-axis motor currents (that is, the motor currents iu, the motor currents iv, and the motor currents iw) to the two-axis motor currents (that is, the inverter output current id and the inverter output current iq) by using the phase θes (Step S10). The tenth functional unit f10 outputs the two-axis motor current to the first functional unit f1 and the third functional unit f3.

(Operational Effect)

Hitherto, the drive device for a motor 1 according to the first embodiment of the present disclosure has been described. In the drive device for a motor 1, the eighth functional unit f8 (an example of a holding unit) holds a relationship between the fluctuation in the voltage supplied to the inverter 60 and the correction value of the phase. Correction value addition means (f6 and f7) adds the correction value to at least one of the phase used when three-phase/two-phase conversion is performed to convert the three phases into two phases, and the phase used when two-phase/three-phase conversion is performed to convert the two phases into the three phases.

In this manner, in the drive device for a motor 1, the control device 90 can suppress the torque fluctuation in the high-speed range of the motor, and can simultaneously suppress the rotation speed fluctuation. In addition, when the torque fluctuation and the rotation speed fluctuation can be suppressed, compared to a case where the torque fluctuation and the rotation speed fluctuation cannot be suppressed, a peak value of the current can be lowered by suppressing the pulsation of the current. Therefore, the control device 90 can suppress the torque fluctuation and the rotation speed fluctuation, and can simultaneously suppress an operating range decrease.

In another embodiment of the present disclosure, the correction value $\theta c1$ and the correction value $\theta c2$ may be the same.

In the process according to the embodiment of the present disclosure, sequences of the process may be substituted within a range in which a proper process is performed.

Each of the storage unit and the storage device (including a register and a latch) in the embodiment of the present disclosure may be provided anywhere within a range in which proper information is transmitted and received. In addition, each of a plurality of the storage units and the storage devices may be present within the range in which the proper information is transmitted and received, and may distribute and store data.

Although the embodiment of the present disclosure has been described, the above-described control device 90 and other control devices may internally have a computer system. Then, a procedure of the above-described processes is stored in a computer-readable recording medium in a form of a program, and the above-described processes are performed by the computer reading and executing the program. A specific example of a computer will be described below. Fig. 7 is a schematic block diagram illustrating a configuration of a computer according to at least one embodiment.

As illustrated in Fig. 7, a computer 5 includes a CPU 6, a main memory 7, a storage 8, and an interface 9.

For example, each of the above-described control device 90 and other control devices is mounted on the computer 5. An operation of each processing unit described above is stored in the storage 8 in a form of a program. The CPU 6 reads the program from the storage 8, develops the read program into the main memory 7, and executes the above-described process in accordance with the program. In addition, the CPU 6 secures a storage area corresponding to each of the above-described storage units in the main memory 7 in accordance with the program.

Examples of the storage 8 include a hard disk drive (HDD), a solid state drive (SSD), a magnetic disk, an optical magnetic disk, a compact disc read only memory (CD-ROM), a digital versatile disc read only memory (DVD-ROM), and a semiconductor memory. The storage 8 may be an internal medium directly connected to a bus in the computer 5 or may be an external medium connected to the computer 5 via an interface 9 or via a communication line. In addition, when this program is delivered to the computer 5 via the communication line, the computer 5 receiving the delivered program may develop the program in the main memory 7 to execute the above-described process. In at least one embodiment, the storage 8 is a non-temporary tangible storage medium.

In addition, the above-described program may realize a part of the above-described functions. In addition, the above-described program may be a file, a so-called difference file (difference program), which can realize the above-described functions in combination with a program previously recorded in the computer system.

Although some embodiments of the present disclosure have been described, these embodiments are examples, and do not limit the scope of the disclosure. These embodiments may have various additions, various omissions, various replacements, and various changes within the scope not departing from the concept of the disclosure.

<Additional Notes>

For example, the control device 90 described in each embodiment of the present disclosure is understood as follows.

(1) According to a first aspect, there is provided the control device (90) of the motor (70) having means (f3) for setting a voltage command on two axes of a rotational orthogonal coordinate system, means (f5) for coordinate-converting the voltage command of the two axes into three phases, means (110d) for applying the voltage command of the three phases to the motor (70) through power conversion by the inverter (60), means (110b) for feeding back a terminal current of the motor (70), power-factor angle determination means (f9) for determining a power-factor angle from the feedback current, and power-factor angle adjustment means (f10) for adjusting the power-factor angle to a phase used when the terminal current of the motor (70) obtained in the three phases is converted into orthogonal coordinates.

The control device (90) includes the holding unit (f8) that holds a relationship between a fluctuation in a DC voltage supplied to the inverter (60) and a correction value of a phase, and correction value addition means (f6 and f7) for adding the correction value to at least one of a phase used when three-phase/two-phase conversion is performed to convert the three phases into two phases and a phase used when two-phase/three-phase conversion is performed to convert the two phases into the three phases.

In the control device (90), the holding unit (f8) holds the relationship between the fluctuation in the DC voltage supplied to the inverter (60) and the correction value of the phase. Correction value addition means (f6 and f7) adds the correction value to at least one of the phase used when three-phase/two-phase conversion is performed to convert the three phases into two phases, and the phase used when two-phase/three-phase conversion is performed to convert the two phases into the three phases.

In this manner, the control device (90) can change the command by using the relationship between the fluctuation in the DC voltage and the correction value of the phase. As a result, even when the fluctuating voltage is input to the inverter (60), it is possible to suppress the torque fluctuation, the rotation speed fluctuation, and the operating range decrease in the high-speed range of the motor (70).

(2) In the control device (90) of (1), the control device (90) according to a second aspect includes the detection unit (110a1) that detects the fluctuation. The correction value is determined, based on a detection result of the detection unit (110a1).

In this manner, the control device (90) can change the command, based on the result detected by the detection unit (110a1). As a result, even when the voltage frequently fluctuates, the voltage after the fluctuation can always be detected. Therefore, even when the fluctuating voltage is input to the inverter (60), it is possible to suppress the torque fluctuation, the rotation speed fluctuation, and the operating range decrease in the high-speed range of the motor (70).

(3) In the control device (90) of (1) or (2), the control device (90) according to a third aspect includes the calculation unit (110d) that generates a control command for controlling the inverter (60), based on a phase to which the correction value is added.

In this manner, the control device (90) can be expected to generate a control command of the inverter (60) which can always suppress the torque fluctuation, the rotation speed fluctuation, and the operating range decrease in the high-speed range of the motor (70) even when the fluctuating voltage is input to the inverter (60).

(4) In the control device (90) of (3), as the control device (90) according to a fourth aspect, the calculation unit (110d) generates the control command for controlling the inverter (60), based on the fluctuation.

In this manner, the control device (90) can be expected to generate a control command of the inverter (60) which can always suppress the torque fluctuation, the rotation speed fluctuation, and the operating range decrease in the high-speed range of the motor (70) even when the fluctuating voltage is input to the inverter (60).

(5) In the control device (90) of (4), as the control device (90) according to a fifth aspect, the calculation unit (110d) generates the control command, based on a voltage required for driving a load (70) of the inverter (60).

In this manner, the control device (90) can be expected to generate a control command of the inverter (60) which can always suppress the torque fluctuation, the rotation speed fluctuation, and the operating range decrease in the high-speed range of the motor (70) even when the fluctuating voltage is input to the inverter (60).

(6) According to a sixth aspect, a drive device for the motor (70) includes the control device and the inverter.

In this manner, the drive device for the motor (70) can change the command by using the relationship between the fluctuation in the DC voltage and the correction value of the phase. As a result, even when the fluctuating voltage is input to the inverter (60), it is possible to suppress the torque fluctuation, the rotation speed fluctuation, and the operating range decrease in the high-speed range of the motor (70).

(7) In the drive device (1) for the motor (70) of (6), the drive device (1) for the motor (70) according to a seventh aspect includes the control device (90) and the inverter (60).

In this manner, the drive device (1) of the motor (70) can change the command by using the relationship between the fluctuation in the DC voltage and the correction value of the phase. As a result, even when the fluctuating voltage is input to the inverter (60), it is possible to suppress the torque fluctuation, the rotation speed fluctuation, and the operating range decrease in the high-speed range of the motor (70).

(8) According to an eighth aspect, there is provided a control method of using the control device (90) for the motor (70) having means (f3) for setting a voltage command on two axes of a rotational orthogonal coordinate system, means (f5) for coordinate-converting the voltage command of the two axes into three phases, means (110d) for applying the voltage command of the three phases to the motor (70) through power conversion by the inverter (60), means (110b) for feeding back a terminal current of the motor (70), power-factor angle determination means (f9) for determining a power-factor angle from the feedback current, and power-factor angle adjustment means (f10) for adjusting the power-factor angle to a phase used when the terminal current of the motor (70) obtained in the three phases is converted into orthogonal coordinates.

The control method includes holding a relationship between a fluctuation in a DC voltage supplied to the inverter (60) and a correction value of a phase, and adding the correction value to at least one of a phase used when three-phase/two-phase conversion is performed to convert the three phases into two phases and a phase used when two-phase/three-phase conversion is performed to convert the two phases into the three phases.

In this manner, the control method can change the command by using the relationship between the fluctuation in the DC voltage and the correction value of the phase. As a result, even when the fluctuating voltage is input to the inverter (60), it is possible to suppress the torque fluctuation, the rotation speed fluctuation, and the operating range decrease in the high-speed range of the motor (70).

(9) According to a ninth aspect, there is provided a program causing the computer (5) of the control device (90) to execute a process for the motor (70) having means (f3) for setting a voltage command on two axes of a rotational orthogonal coordinate system, means (f5) for coordinate-converting the voltage command of the two axes into three phases, means (110d) for applying the voltage command of the three phases to the motor (70) through power conversion by the inverter (60), means (110b) for feeding back a terminal current of the motor (70), power-factor angle determination means (f9) for determining a power-factor angle from the feedback current, and power-factor angle adjustment means (f10) for adjusting the power-factor angle to a phase used when the terminal current of the motor (70) obtained in the three phases is converted into orthogonal coordinates.

The control method includes holding a relationship between a fluctuation in a DC voltage supplied to the inverter (60) and a correction value of a phase, and

adding the correction value to at least one of a phase used when three-phase/two-phase conversion is performed to convert the three phases into two phases and a phase used when two-phase/three-phase conversion is performed to convert the two phases into the three phases.

In this manner, the program can change the command by using the relationship between the fluctuation in the DC voltage and the correction value of the phase. As a result, even when the fluctuating voltage is input to the inverter (60), it is possible to suppress the torque fluctuation, the rotation speed fluctuation, and the operating range decrease in the high-speed range of the motor (70).

Industrial Applicability

According to the control device, the drive device for a motor, the control method, and the program in the present disclosure, it is possible to suppress a torque fluctuation, a rotation speed fluctuation, and an operating range decrease in a high-speed range of a motor even when a fluctuating voltage is input to an inverter.

Reference Signs List

1: Drive device for motor
5: Computer
6: CPU
7: Main memory
8: Storage
9: Interface
10: Power supply
20: Converter
30: Reactor
40: First capacitor
50: Second capacitor
60: Inverter
70: Motor
80: Current sensor
90: Control device
110a: Voltage detection circuit
110a1, 110b1: A/D converter
110b: Current detection circuit
110c: Voltage command generation unit
110d: PWM duty calculation unit
f1: First functional unit
f2: Second functional unit
f3: Third functional unit
f4: Fourth functional unit
f5: Fifth functional unit
f6: Sixth functional unit
f7: Seventh functional unit
f8: Eighth functional unit
f9: Ninth functional unit
f10: Tenth functional unit

**Claims**

1. A control device for a permanent magnet synchronous motor having

   means for setting a voltage command on two axes of a rotational orthogonal coordinate system,
   means for coordinate-converting the voltage command of the two axes into three phases,
   means for applying the voltage command of the three phases to a motor through power conversion by an inverter,
   means for feeding back a terminal current of the motor,
   power-factor angle determination means for determining a power-factor angle from the feedback current, and
   power-factor angle adjustment means for adjusting the power-factor angle to a phase used when the terminal current of the motor obtained in the three phases is converted into orthogonal coordinates, the control device comprising:

   a holding unit that holds a relationship between a fluctuation in a DC voltage supplied to the inverter and a correction value of a phase; and
   correction value addition means for adding the correction value to at least one of a phase used when three-phase/two-phase conversion is performed to convert the three phases into two phases and a phase used when two-phase/three-phase conversion is performed to convert the two phases into the three phases.

2. The control device according to Claim 1, further comprising:

   a detection unit that detects the fluctuation,
   wherein the correction value is determined, based on a detection result of the detection unit.

3. The control device according to Claim 1 or 2, further comprising:
   a calculation unit that generates a control command for controlling the inverter, based on a phase to which the correction value is added.

4. The control device according to Claim 3,
   wherein the calculation unit generates the control command for controlling the inverter, based on the fluctuation.

5. The control device according to Claim 4,
   wherein the calculation unit generates the control command, based on a voltage required for driving a load of the inverter.

6. A drive device for a motor comprising:

   the control device according to any one of Claims 1 to 5; and
   the inverter.

7. The drive device for a motor according to Claim 6, further comprising:
   a film capacitor provided in an input of the inverter to suppress a fluctuation in a voltage supplied to the inverter.

8. A control method of using a control device for a permanent magnet synchronous motor having means for setting a voltage command on two axes of a rotational orthogonal coordinate system, means for coordinate-converting the voltage command of the two axes into three phases, means for applying the voltage command of the three phases to a motor through power conversion by an inverter, means for feeding back a terminal current of the motor, power-factor angle determination means for determining a power-factor angle from the feedback current, and power-factor angle adjustment means for adjusting the power-factor angle to a phase used when the terminal current of the motor obtained in the three phases is converted into orthogonal coordinates, the control method comprising:

   holding a relationship between a fluctuation in a DC voltage supplied to the inverter and a correction value of a phase; and
   adding the correction value to at least one of a phase used when three-phase/two-phase conversion is performed to convert the three phases into two phases and a phase used when two-phase/three-phase conversion is performed to convert the two phases into the three phases.

9. A program causing a computer of a control device to execute a process for a permanent magnet synchronous motor having means for setting a voltage command on two axes of a rotational orthogonal coordinate system, means for coordinate-converting the voltage command of the two axes into three phases, means for applying the voltage command of the three phases to a motor through power conversion by an inverter, means for feeding back a terminal current of the motor, power-factor angle determination means for determining a power-factor angle from the feedback current, and power-factor angle adjustment means for adding or subtracting the power-factor angle to or from a phase used when the terminal current of the motor obtained in the three phases is converted into orthogonal coordinates, the process comprising:

holding a relationship between a fluctuation in a DC voltage supplied to the inverter and a correction value of a phase; and
adding the correction value to at least one of a phase used when three-phase/two-phase conversion is performed to convert the three phases into two phases and a phase used when two-phase/three-phase conversion is performed to convert the two phases into the three phases.

FIG. 1

EP 4 277 115 A1

# FIG. 2

EP 4 277 115 A1

## FIG. 3

| INTER-TERMINAL VOLTAGE OF FIRST CAPACITOR | OUTPUT FREQUENCY OF INVERTER | FIRST PHASE CORRECTION FUNCTION | CORRECTION VALUE $\theta c1$ |
|---|---|---|---|
| Vx | $\omega$ | Fn1 (Vx, $\omega$) | $\theta c1$ = Fn1 (Vx, $\omega$) |

## FIG. 4

| INTER-TERMINAL VOLTAGE OF FIRST CAPACITOR | OUTPUT FREQUENCY OF INVERTER | SECOND PHASE CORRECTION FUNCTION | CORRECTION VALUE $\theta c2$ |
|---|---|---|---|
| Vx | $\omega$ | Fn2 (Vx, $\omega$) | $\theta c2$ = Fn2 (Vx, $\omega$) |

## FIG. 5

START

ACQUIRE INTER-TERMINAL VOLTAGE OF FIRST CAPACITOR ~S1

CALCULATE VOLTAGE REQUIRED FOR MOTOR FROM FREQUENCY $\omega$ ~S2

SPECIFY CORRECTION VALUE $\theta c1$ FROM FIRST PHASE CORRECTION FUNCTION Fn1 ~S3

CHANGE PHASE USED FOR TWO-PHASE/THREE-PHASE CONVERSION TO $\theta v23$ BY ADDING CORRECTION VALUE $\theta c1$ TO PHASE USED FOR TWO-PHASE/THREE-PHASE CONVERSION ~S4

CONVERT TWO-AXIS VOLTAGE COMMAND INTO THREE-AXIS VOLTAGE COMMAND BY USING $\theta v23$ ~S5

END

## FIG. 6

START

ACQUIRE INTER-TERMINAL VOLTAGE OF FIRST CAPACITOR ～S6

CALCULATE VOLTAGE REQUIRED FOR MOTOR FROM FREQUENCY $\omega$ ～S7

SPECIFY CORRECTION VALUE $\theta c2$ FROM SECOND PHASE CORRECTION FUNCTION Fn2 ～S8

CHANGE PHASE USED FOR THREE-PHASE/TWO-PHASE CONVERSION TO $\theta es$ BY ADDING CORRECTION VALUE $\theta c2$ TO PHASE USED FOR THREE-PHASE/TWO-PHASE CONVERSION ～S9

CONVERT THREE-AXIS VOLTAGE COMMAND INTO TWO-AXIS VOLTAGE COMMAND BY USING PHASE $\theta es$ ～S10

END

## FIG. 7

5

6

CPU

MAIN MEMORY  7

STORAGE  8

INTERFACE  9

## INTERNATIONAL SEARCH REPORT

International application No.

**PCT/JP2021/047999**

| A. | CLASSIFICATION OF SUBJECT MATTER |
|---|---|

*H02P 21/05*(2006.01)i; *H02P 27/06*(2006.01)i
FI:  H02P21/05; H02P27/06

According to International Patent Classification (IPC) or to both national classification and IPC

| B. | FIELDS SEARCHED |
|---|---|

Minimum documentation searched (classification system followed by classification symbols)

H02P21/05; H02P27/06

Documentation searched other than minimum documentation to the extent that such documents are included in the fields searched

Published examined utility model applications of Japan 1922-1996
Published unexamined utility model applications of Japan 1971-2022
Registered utility model specifications of Japan 1996-2022
Published registered utility model applications of Japan 1994-2022

Electronic data base consulted during the international search (name of data base and, where practicable, search terms used)

| C. | DOCUMENTS CONSIDERED TO BE RELEVANT |
|---|---|

| Category* | Citation of document, with indication, where appropriate, of the relevant passages | Relevant to claim No. |
|---|---|---|
| Y | JP 2018-125913 A (MITSUBISHI HEAVY INDUSTRIES THERMAL SYSTEMS LTD.) 09 August 2018 (2018-08-09)<br>paragraphs [0024]-[0028], [0031], [0032], [0044], fig. 2, 4 | 1-9 |
| Y | JP 2016-92918 A (FANUC LTD.) 23 May 2016 (2016-05-23)<br>paragraphs [0031]-[0034], [0075]-[0086], fig. 6, 7 | 1-9 |
| A | JP 2014-161140 A (HITACHI, LTD.) 04 September 2014 (2014-09-04)<br>paragraphs [0070]-[0077], fig. 5, 9 | 1-9 |
| A | JP 2013-81343 A (MITSUBISHI HEAVY INDUSTRIES, LTD.) 02 May 2013 (2013-05-02)<br>paragraphs [0018]-[0042], fig. 1, 2 | 1-9 |

☐ Further documents are listed in the continuation of Box C.    ☑ See patent family annex.

| * | Special categories of cited documents: |
|---|---|
| "A" | document defining the general state of the art which is not considered to be of particular relevance |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| | |
|---|---|
| "T" | later document published after the international filing date or priority date and not in conflict with the application but cited to understand the principle or theory underlying the invention |
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
|---|---|
| **21 February 2022** | **08 March 2022** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (January 2015)

**INTERNATIONAL SEARCH REPORT**
Information on patent family members

International application No.

**PCT/JP2021/047999**

| Patent document cited in search report | | | Publication date (day/month/year) | Patent family member(s) | Publication date (day/month/year) |
|---|---|---|---|---|---|
| JP | 2018-125913 | A | 09 August 2018 | EP 3355466 A1 paragraphs [0031]-[0036], [0040]-[0043], [0069], fig. 2, 4 | |
| JP | 2016-92918 | A | 23 May 2016 | US 2016/0126871 A1 paragraphs [0045]-[0048], [0079]-[0086], fig. 6, 7 CN 105577056 A | |
| JP | 2014-161140 | A | 04 September 2014 | (Family: none) | |
| JP | 2013-81343 | A | 02 May 2013 | (Family: none) | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2021023546 A
- JP 4764124 B